# EUROPEAN PATENT SPECIFICATION

(11) **EP 2 903 191 B1**
(45) Date of publication and mention of the grant of the patent: **25.05.2016**
(21) Application number: 14290025.7
(22) Date of filing: 04.02.2014
(51) Int. Cl.: H04J 14/02, H04J 14/04, H04J 14/06

(54) **SPATIAL DIVISION MULTIPLEXING EQUIPMENT AND ASSOCIATED METHOD**
RAUMMULTIPLEXAUSRÜSTUNG UND ENTSPRECHENDES VERFAHREN
ÉQUIPEMENT DE MULTIPLEXAGE À DIVISION SPATIALE ET PROCÉDÉ ASSOCIÉ

(43) Date of publication of application: 05.08.2015
(73) Proprietor: ALCATEL LUCENT, 92100 Boulogne-Billancourt (FR)
(72) Inventor: Salsi, Massimiliano, 91620 Nozay (FR); De Valicourt, Guilhem, 91620 Nozay (FR)
(74) Representative: Berthier, Karine

(56) References cited:
- EP-A2- 2 365 654
- XIANG LIU ET AL: "Performance improvement of space-division multiplexed 128-Gb/s PDM-QPSK signals by constructive superposition in a single-input-multiple-output configuration", OPTICAL FIBER COMMUNICATION CONFERENCE AND EXPOSITION (OFC/NFOEC), 2012 AND THE NATIONAL FIBER OPTIC ENGINEERS CONFERENCE, IEEE, 4 March 2012 (2012-03-04), pages 1-3, XP032174844, ISBN: 978-1-4673-0262-3
- AN LI ET AL: "Space-Division Multiplexed High-Speed Superchannel Transmission Over Few-Mode Fiber", JOURNAL OF LIGHTWAVE TECHNOLOGY, IEEE SERVICE CENTER, NEW YORK, NY, US, vol. 30, no. 24, 1 December 2012 (2012-12-01), pages 3953-3964, XP011486084, ISSN: 0733-8724, DOI: 10.1109/JLT.2012.2206797

## Description

### BACKGROUND OF THE INVENTION

The present invention relates to the field of the passive optical networks (PONs) and more particularly to the passive optical networks comprising spatial division multiplexing (SDM) capability.

In order for the operators to reduce the operational expenditures (Opex) of the passive optical networks, one way is to reduce the number of optical line terminals (OLTs) which comprise active equipments with high energy consumption. Until now, time division multiplexing (TDM) has allowed to gather multiple optical network units (ONUs) to a single OLT but other technology such as wavelength division multiplexing (WDM) are developed to further reducing the number of OLT. Spatial division multiplexing, wherein several polarization modes can be multiplexed together and transmitted in a multi-mode fiber so that the capacity is multiplied, appears as one solution to cope with such problem. However, the architecture of the spatiale division multiplexing equipment already developed require complex, expensive and high consumption equipments at the customer's side to enable signal processing of the spatial multiplexed signals. Thus, in order to also limit the capital expenditures and to limit the power consumption of the network, need is to enable the use of already implemented equipment and to minimize the complexity of the ONUs located at the client side.

EP2365654 discloses transmission systems and methods using multi-core fibres.

### SUMMARY OF THE INVENTION

It is therefore an object of the present invention to overcome the above mentioned drawbacks of the state of the art and to provide a solution allowing passive optical network with spatial multiplexing capability while keeping ONUs with a simple technology (direct detection and modulation).

Thus, the present invention refers to a method for applying spatial division multiplexing "SDM" on the optical signals transmitted from an optical line terminal "OLT" to the optical network units "ONUs" of a passive optical network "PON" through at least one few mode fiber "FMF" linked to a SDM demultiplexer comprising a plurality of outputs associated respectively to a spatial mode, a selected output of the SDM demultiplexer being linked to at least one ONU wherein the method comprises the following steps:
- transmitting configuration signals from ONUs connected to the selected outputs of the SDM demultiplexer toward the OLT,
- receiving and detecting the transmitted configuration signals at the OLT,
- determining, within the OLT, the channel transfer function of the modes associated with the configuration signals received from the ONUs,
- computing the inverse of the determined channel transfer function,
- modulating the data optical field using the computed inverse transfer function to produce the optical signals associated with the different modes,
- multiplexing spatially the modulated optical signals,
- transmitting the multiplexed optical signals to the at least one FMT toward the ONUs.

According to another aspect of the present invention, the selected outputs of the SDM demultiplexer are selected so that only a degenerated spatial mode per spatial mode group is selected.

According to a further aspect of the present invention, for the spatial mode group comprising degenerated spatial modes, the reception and detection of the transmitted configuration signals is achieved on all the degenerated spatial modes.

According to an additional aspect of the present invention, the configuration signals comprise a predetermined probe signal.

According to another aspect of the present invention, the configuration signals also comprise an identifier of the ONU emitting the signal.

According to an additional aspect of the present invention, the transmitted optical signals are also multiplexed according to a wavelength division multiplexing.

According to a further aspect of the present invention, the signals transmitted by the ONUs toward the OLT have a non-return to zero on-off keying modulation format.

According to another aspect of the present invention, the signals received at the OLT are received and detected by a polarization diversity coherent receiver.

The embodiments of the present invention also refer to an optical line terminal "OLT" of a passive optical network "PON", the said PON comprising a spatial division multiplexing "SDM" multiplexer located within the OLT, at least one few mode fiber "FMF" and a SDM demultiplexer comprising a plurality of outputs associated respectively to a spatial mode, a selected output of the SDM demultiplexer being linked to at least one ONU, wherein the OLT is configured for:
- receiving and detecting configuration signals transmitted by ONUs,
- determining the channel matrices of the modes associated with the configuration signals received from the ONUs,
- computing the inverse of the determined channel matrices,
- modulating the data optical field using the computed inverse matrix to produce the optical signals associated with the different modes, multiplexing spatially the modulated optical signals,
- transmitting the multiplexed optical signal toward the, at least one, FMF toward the ONUS.

According to another aspect of the present invention, the selected outputs of the SDM demultiplexer arc selected so that only a degenerated spatial mode per Spatial mode group is selected at the ONU side.

According to a further aspect of the present invention, for the spatial mode group comprising degenerated spatial modes, the optical line terminal is configured for receiving and detecting transmitted configuration signals on all the degenerated spatial modes.

According to an additional aspect of the present invention, the optical line terminal comprises a polarization diversity coherent receiver configured for receiving and detecting configuration signals transmitted by ONUs.

According to another aspect of the present invention, the optical line terminal comprises digital signal processing equipments, the signals of a common mode group being processed in a common digital signal processing equipment.

According to a further aspect of the present invention, the optical line terminal comprises modulators configured for applying wavelength division multiplexing modulation and/or time division multiplexing.

The embodiments of the present invention also refer to a passive optical network "PON" comprising an optical line terminal, a few mode fiber and a SDM demultiplexer comprising a plurality of outputs associated respectively to a spatial mode, a selected output of the SDM demultiplexer being linked to at least one ONU.

### BRIEF DESCRIPTION OF THE DRAWINGS

**FIG.1** is a diagram of an example of a few mode fiber and the spatial modes that can be transmitted through the fiber;
**FIG.2** is a diagram of an passive optical network with spatial division multiplexing capability according to an embodiment of the present invention;
**FIG.3** is a diagram of a channel matrix corresponding to the transfer function of the few mode fiber;
**Fig.4** is a diagram of an emitter for group mode having a single mode;
**FIG.5** is a diagram of an emitter for a group mode with two degenerated modes;
**Fig.6, 7** and **8** are diagrams of possible architecture for the emitters of the optical line terminal;
FIG.**9** is a diagram of a receiver of the optical line terminal;
**FIG.10** is a diagram of the equipment of a passive optical network for a group mode comprising two degenerated modes;
FIG.**11** is a flowchart representing the different steps of the method according to the embodiment of the present invention;

### DETAILED DESCRIPTION OF THE INVENTION

As used herein, the term "LP" refers to the acronym linear polarization;
As used herein, the term "degenerated mode" refers to the spatial modes belonging to a common spatial mode group or linear polarization. For example, modes LP₁₁ₐ et LP_{11b} are degenerated modes of the LP₁₁ mode group;
As used herein, the term "PON" refers to the acronym passive optical network;
As used herein, the term "OLT" refers to the acronym optical line terminal;
As used herein, the term "ONU" refers to the acronym optical network unit;
As used herein, the term "SDM" refers to the acronym spatial division multiplexing;
As used herein, the term "WDM" refers to the acronym wavelength division multiplexing;
As used herein, the terms "ADC and DAC" refer to the acronyms analog-to-digital converter and digital-to-analog converter;
As used herein, the term "OOK" refer to the acronym On-Off Keying;
As used herein, the term "NRZ" refer to the acronym Non-Return to Zero;
As used herein, the term "FMF" refer to the acronym Few Mode Fiber.

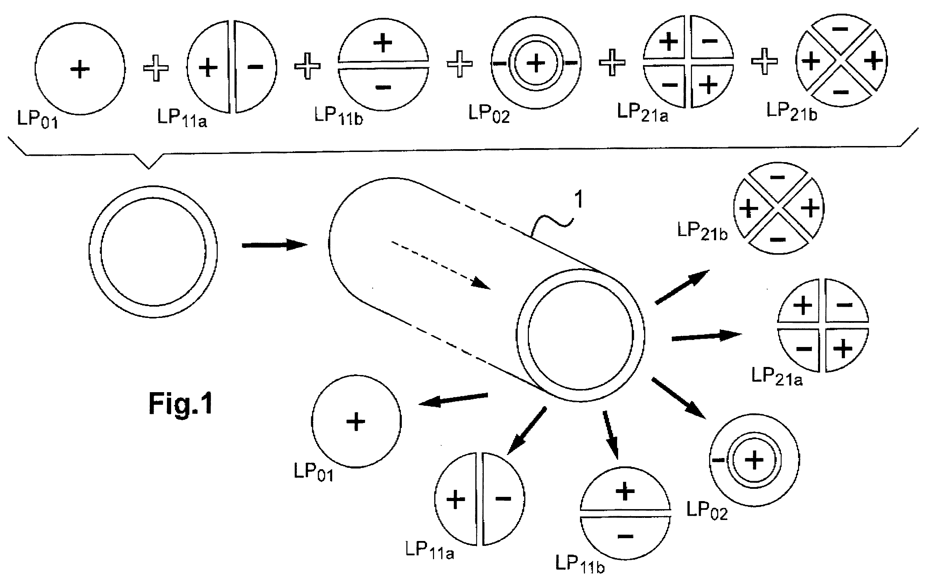

The embodiments of the present invention refer to a passive optical network (PON) based on spatial division multiplexing (SDM). Spatial division multiplexing refers to the multiplexing or superimposition of a plurality of signals having different polarizations called polarization modes or modes. The transmission of SDM signals requires adapted optical links such as few mode fibers (FMF) which are capable of transmitting several modes. Fig.1 represents a diagram of different modes that can be transmitted through a FMF 1. In this example, six modes, noted LP₀₁, LP₁₁ₐ, LP_{11b}, LP₀₂, LP₂₁ₐ and LP_{21b}, are transmitted through the FMF 1. Each mode corresponds to a polarization which is represented by the + and - signs in the diagram. The LP₁₁ₐ and LP_{11b} on one side and the LP₂₁ₐ and LP_{21b} on the other side are degenerated modes of respectively the LP₁₁ mode group and the LP₂₁ mode group. Degenerated modes arc correlated to each other so that digital signal processing needs to be achieved at destination on the signals in order to retrieve the data transmitted on these modes.

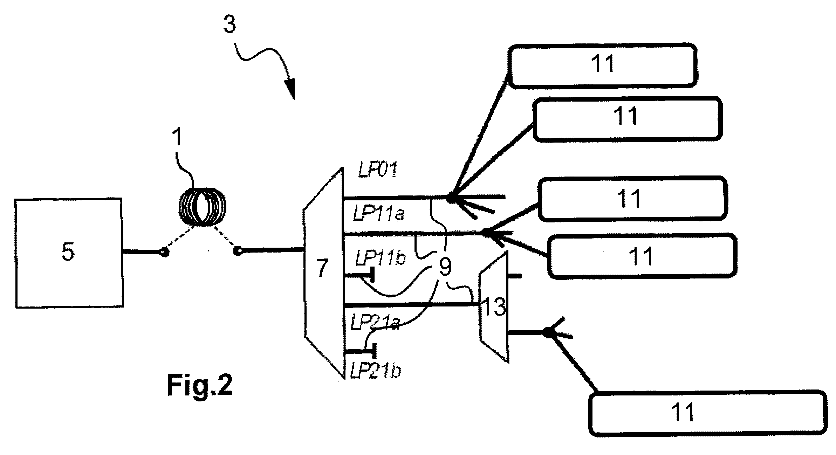

In order to avoid such signal processing at the client side, an idea of the present invention is to transmit signals to only one of the degenerated modes for each spatial mode group as represented in the passive optical network (PON) 3 in fig.2. Indeed, in fig.2, the PON 3 comprises an optical line terminal (OLT) 5 comprising a SDM multiplexer linked to a remote SDM demultiplexer 7 via a FMF 1. The remote SDM demultiplexer 7 comprises a plurality of outputs 9 corresponding to the different modes and linked to the ONUs, for example via single mode fiber (SMF). However, for the mode groups comprising degenerated modes, only one output is connected toward optical network units (ONUs) 11 of the PON 3. Thus, in the present case, outputs corresponding to the LP_{11b} and LP_{21b} are not connected (in the same way, LP₁₁ₐ and LP₂₁ₐ could have been disconnected instead of LP_{11b} and LP_{21b}).

Other multiplexing techniques such as wavelength division multiplexing (WDM) or time division multiplexing can be used in addition to the spatial division multiplexing so that a plurality of ONUs can be connected to a single output of the SDM demultiplexer 7, for example via a WDM demultiplexer 13. The different types of technologies used for the PON and the ONUs can be for example time and wavelength division multiplexing PON (TWDM-PON) PON, Gigabit PON (GPON), XGPON, or a combination of the different PON technologies.

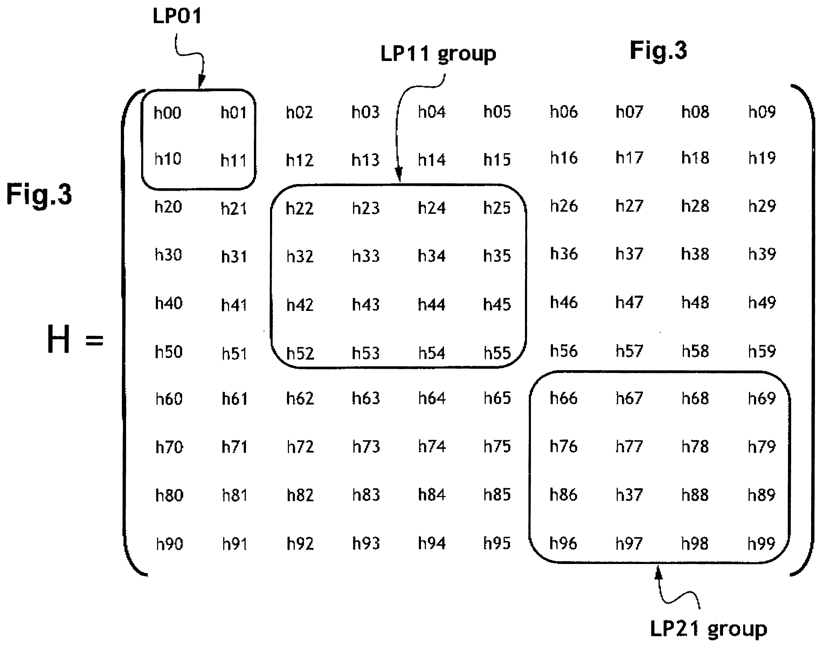

Besides, signals transmitted through the FMF 1 undergone impairments leading, in the case of mode group, to a transfer of a part of the signal from one degenerated mode to the other. As a consequence, if a signal is transmitted only on the LP₁₁ₐ mode from the OLT 5, after transmission through the FMF 1, the signal will be distributed between the LP₁₁ₐ and the LP_{11b} at the remote WDM demultiplexer 7 so that signal processing is required at the remote SDM demultiplexer 7 to retrieve the original signal and transmit it through a single mode fiber 1 towards the ONUs 11. In order to avoid the implementation of digital processing equipment at the remote SDM demultiplexer 7, the transfer function also called channel function of the FMF 1 is determined by sending configuration signals comprising probe signals from only one of the degenerated modes from the remote SDM demultiplexer 7 toward the OLT 5. Thus, by analysing the signals received by the OLT 5 on both degenerated modes, the transfer function of the FMF 1 for this mode can be deducted; Then, the inverse of the transfer function can be computed and applied on both degenerated modes at the OLT 5 to produce to a signal comprising only one selected degenerated mode component at the remote SDM demultiplexer 7 after transmission through the FMF 1. The transfer function can be represented by a matrix as represented in Fig.3 where H is the transfer function for different mode groups. The transfer functions corresponding to each mode group are sub-matrices distributed within H. The matrix If has a size of (2*N)×(2*N) where N is the number of considered modes, five in the present case (LP₀₁, LP₁₁ₐ, LP_{11b,} LP₂₁ₐ, and LP_{21b}, but another number of modes could have been chosen). For processing the signals of the LP₁₁ mode group, the knowledge of the matrix LP₁₁ is enough to establish the transfer function for this mode group as there is no or few correlation between the different mode groups.

As mentioned previously, among the outputs of the remote SDM demultiplexer 7 corresponding to the different modes, only one degenerated mode per mode group is connected to ONUS 11 as represented in Fig.2. One of these ONUs 11 is used to send a configuration signal toward the OLT 5. For the LP₁₁ mode group, this signal is sent only on the LP₁₁ₐ, mode at the remote SDM demultiplexer 7 level. At the reception at the OLT 5, signals on both the LP₁₁ₐ and LP_{11b} modes are detected and processed to determine the LP₁₁ mode group transfer function or transfer matrix. Accordingly, the same method is applied for the LP₂₁ mode group with an ONU 11 connected to the output of the remote SDM demultiplexer 7 corresponding to LP₂₁ₐ to determine the LP₂₁ transfer function.

Then, by computing the inverse transfer function, that is to say the inverse of the matrix LP₁₁, one can obtained the transfer function to produce only the LP₁₁ₐ, component at the remote SDM demultiplexer 7. The computed inverse transfer function is therefore applied, by the OLT 5, for the modulation of the data signals transmitted on LP₁₁ₐ and LP_{11b} before transmission through the FMF 1. As a consequence, at the reception at the remote SDM multiplexer 7, the signal contains only an LP₁₁ₐ degenerated mode component and no signal processing is needed at the remote SDM demultiplexer 7 level.

Furthermore, with such technique, the ONUs 11 can be kept very simple with just a burst mode receiver based on direct detection for receiving the downstream signals coming from the OLT 5 and a directed modulated laser for emitting the upstream signals toward the OLT. 5 The modulation format for the transmitted signals is for example an on-off-keying-non return to zero (OOK-NRZ) modulation format however, other advanced modulation formats such as Quadrature Phase Shift Keying (QPSK), Amplitude Shift Keying (ASK), 8-Quadrature Amplitude Modulation (QAM), 16-QAM or 64-QAM may also be used instead of the OOK-NRZ format.

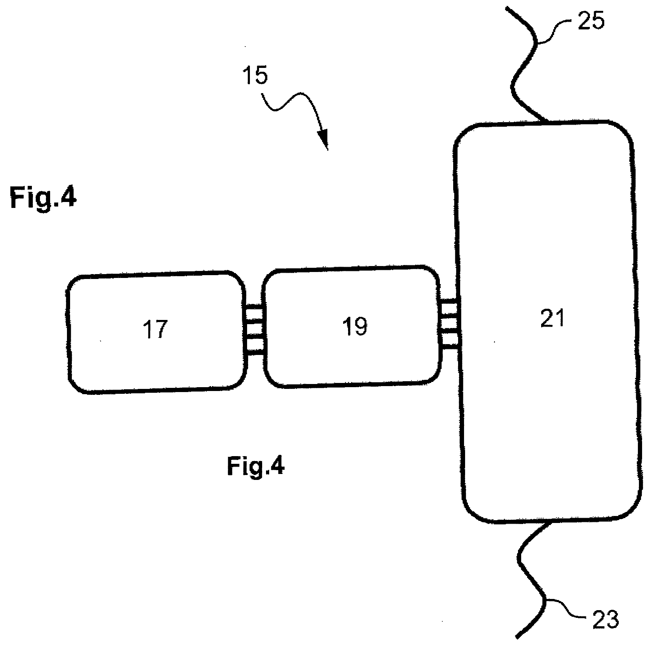

The architecture of the different equipments and notably of the OLT 5 will now be described in more details. Concerning the transmitter 15 of the OLT 5, fig.4 represents a diagram of a transmitter 15 in the case of a mode group having only a single mode such as the LP₀₁ mode. The transmitter 15 comprises a digital-to-analog converter (DAC) 17 connected to a driver 19, for example an electronic amplifier and a polarization division multiplexing (PDM)-In phase-Quadrature (1Q) modulator 21 which is fed by an input optical signal 23, provided for example by a laser source, and which provides an output optical signal 25, the modulation being achieved based on the digital signal converted by the DAC 17.

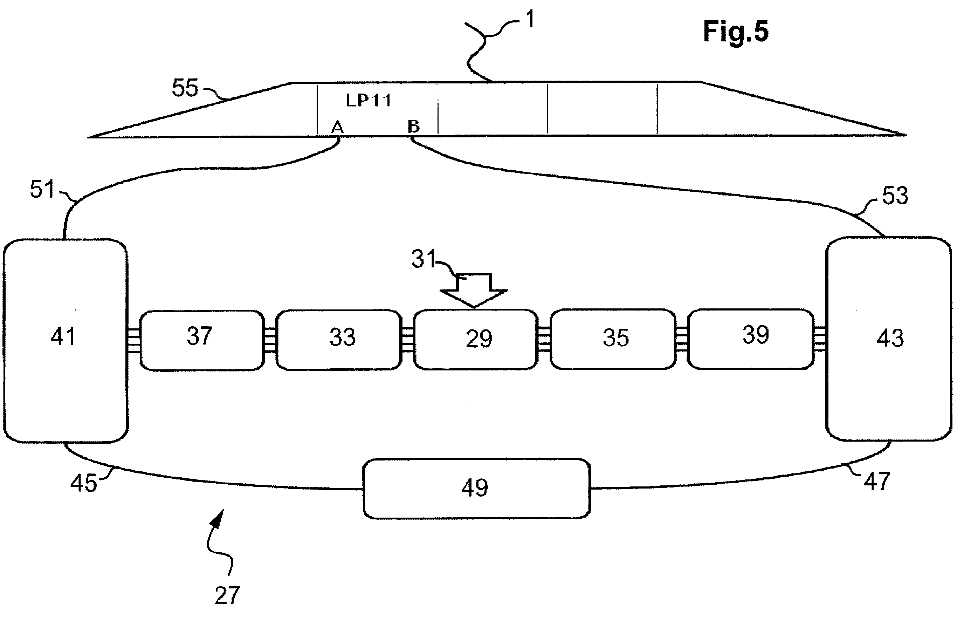

In the case of a mode group comprising two degenerated modes, two output optical signals have to he produced and the corresponding emitter 27 is represented in fig.5. A digital signal processing equipment 29 determines, based on the digital data signal 31 to transmit and the inverse transfer function, the signal components destined to the first and the second degenerated modes that are transmitted respectively to a first and a second DACs 33, 35, drivers 37, 39 and PDM-IQ modulators 41, 43 to modulate respectively a first and a second input optical signals 45, 47 provided by a laser source 49. The first and second output optical signals 51, 53 provided by the first and second modulators 41, 43 are sent to the inputs of a SDM multiplexer 55 corresponding to the first and the second degenerated modes of the mode group, in the present case, the LP₁₁ₐ and the LP_{11b} of the LP₁₁ mode group. The output of the SDM multiplexer 55 being linked to a few mode fiber 1 to be transmitted towards the ONUs 11.

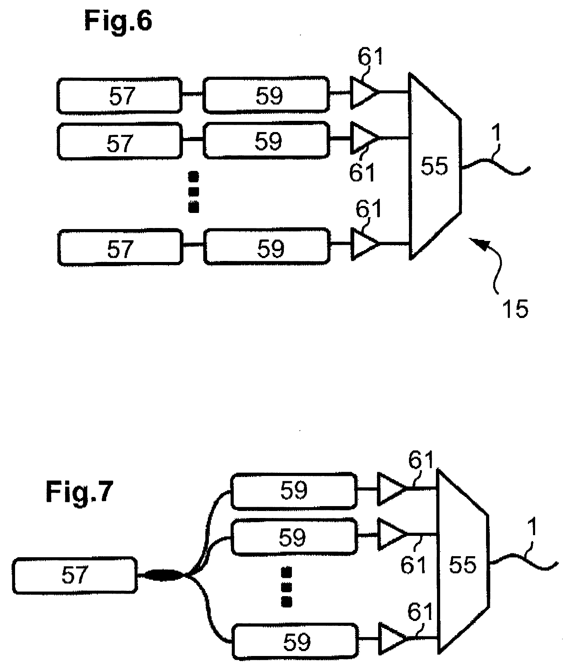

Besides, different structures of transmitter 15 can be implemented depending on the other multiplexing techniques that are combined to the SDM to enhance the number of ONUs, 11 connected to a single OLT 5. Fig. 6 represents an example of transmitter 15 comprising a plurality of branches linked to the plurality of inputs of the SDM multiplexer 55 and comprising each a laser source 57, a PDM-IQ modulator 59 and an amplifier 61 so that different wavelengths could be addressed for one specific mode.

A single laser source 57 may also be used to feed all the PDM-IQ modulators 59 as represented in fig.7.

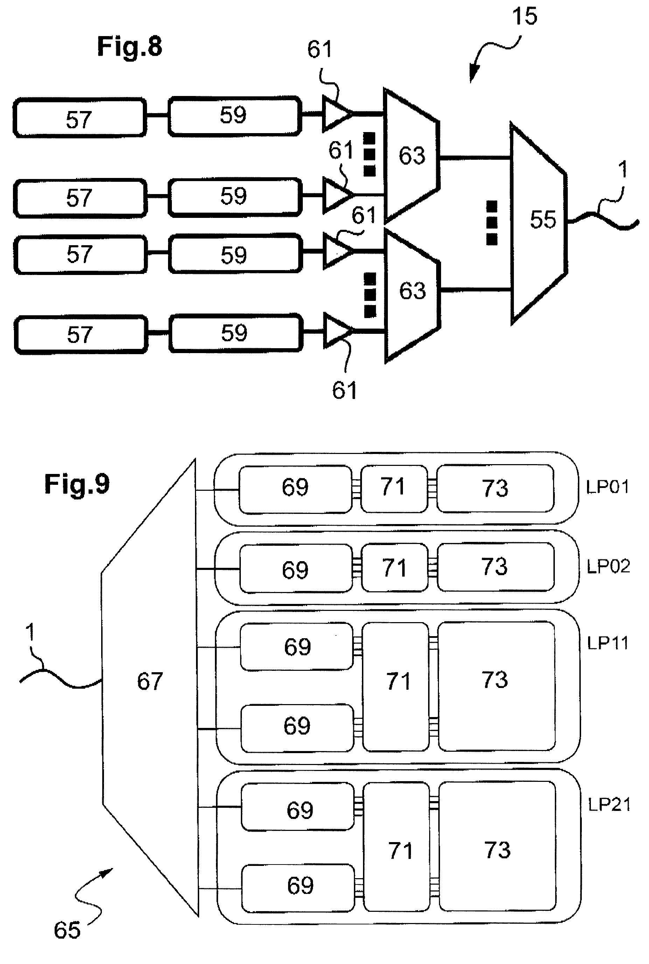

In the case of a combination with a wavelength division multiplexing, WDM multiplexers 63 can be implemented downstream from the SDM multiplexer 55 as represented in fig.8 where the output of the WDM multiplexers 63 are linked respectively to an input of the SDM multiplexer 55 corresponding to a spatial mode.

An embodiment of the receiver 65 of the OLT 5 will now be described in details based on fig.9. As described previously, the OLT 5 has to be able to receive and detect the configuration signals sent on the different modes by ONUs 11. The OLT 5 comprises a SDM demultiplexer 67 configured to demultiplex the SDM signals received from the remote SDM demultiplexer 7 which acts as a multiplexer in the upstream direction. Each output of the SDM demultiplexer 67 located in the OLT 5 is therefore linked to a coherent receiver 69 to detect the signals on each of the modes and notably on each degenerated modes of the mode group. The coherent receivers 69 are linked respectively to digital signal processing (DSP) equipments 73 via analog-to-digital converters (ADC) 71- It has to be noticed that a common DSP 73 (and possibly a common ADC 71) is used for both degenerated modes of a mode group in order to use signals from both modes to compute the transfer function. Such receiver architecture also enables the OLT 5 to detect and retrieve the data sent by the ONUs 11 during normal functioning (after configuration).

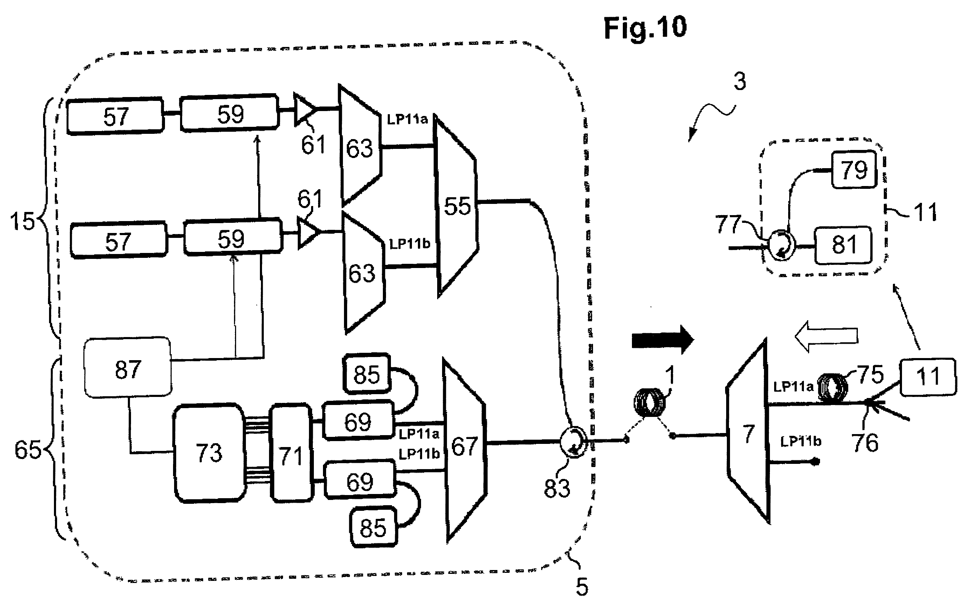

The equipment required for implementing the embodiments of the present invention is represented in fig.10 for one mode group comprising two degenerated modes, LP₁₁ₐ and LP_{11b} in the present example. This equipment comprises an OLT 5 connected to a plurality of ONUs 11 via a few mode fiber 1, a remote SDM demultiplexer 7 and a plurality of single mode fibers 75. Several ONUs 11 can be connected to a single output of the SDM demultiplexer 7 thanks to the use of an optical coupler 76. An example of structure of ONU 11 is also presented wherein it comprises an optical circulator 77 having three input/outputs (I/O), a first I/O linked to the single mode fiber 75 connected to the remote SDM demultiplexer 7, a second I/O linked to a burst mode receiver 79 configured for receiving and detecting the signals sent by the OLT 5 and a third I/O linked to a directed modulated laser (DML) 81 configured for transmitting upstream signals to the OLT 5. The downstream signal are for example sent on a first wavelength channel or band λ_{d} while the upstream signals arc sent on a second wavelength channel or band λᵤ, both signals being modulated according to a OOK-NRZ modulation format.

The OLT 5 comprises an optical circulator 83 comprising three I/O, a first I/O linked to the FMF 1, a second I/O linked to the receiver 65 and a. third I/O linked to the transmitter 15. The receiver 65 comprises a SDM demultiplexer 67 configured for demultiplexing the different modes, LP₁₁ₐ and LP_{11b}, in the present case. Each output of the SDM demultiplexer 67 is linked to a coherent receiver 69 fed by a local oscillator 85, for example a tunable laser, which is configured to be tuned to the wavelength corresponding to the received signal. The signals detected by both coherent receivers 69 are then sent to an analog-to-digital converter 71. The converted digital signals are then sent to a digital signal processing equipment 73 which is configured notably to determine the transfer function of the FMF 1 for the LP₁₁ mode. The said transfer function is then transmitted to an electronic processing equipment 87 configured for computing the inverse transfer function and for applying the said inverse transfer function to the modulation of the signals transmitted on the LP₁₁ mode group. The electronic processing equipment 87 is therefore linked to both PDM-IQ modulators of the transmitter 15 of the OLT 5. The transmitter 15 also comprises two laser sources 57 or a single laser source 57 having its signal split into two parts for feeding the PDM-IQ modulators 59 and two amplifiers 61 configured for amplifying the signals provided by the PDM-IQ modulators 59, the output of the amplifiers 61 being linked respectively to an input of a WDM multiplexer 63. The outputs of the WDM multiplexers 63 are linked to an input of the SDM multiplexer 55 to be transmitted to the FMF via the optical circulator 83.

Thus, fig. 10 represents the different equipments required to process signals exchanged between an OLT 5 and ONUs 11 within a mode group comprising two degenerated modes and comprising a WDM multiplexing in combination with the SDM multiplexing. It is obvious that these equipments have to be duplicated or adapted to process other mode groups. Furthermore, it is also obvious that for mode groups comprising a single mode, such as the LP₀₁ mode, only one coherent receiver is necessary as there is only one signal to detect as well as one transmitter including laser, modulator and optical amplifier.

Besides, the digital signal processing equipments 73 and electronic processing equipment 87 described previously are provided through the use of a dedicated hardware as well as hardware capable of executing software in association with appropriate software dedicated to the signal processing. When provided by a processor, the processing means may be provided by a single dedicated processor, by a single shared processor, or by a plurality of individual processors, some of which may be shared- Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardwares, conventional and/or custom, may also be included.

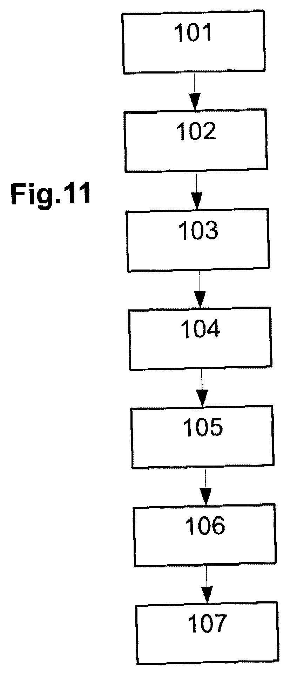

In order to better understand the different steps of the present invention, an example of application of the SDM multiplexing on a given mode group, the LP₁₁ mode group in the present example, according to the embodiments of the present invention will now be described based on the architecture of fig.10 and the flowchart of fig.11.

The method starts with the configuration steps:
The first step 101 refers to a transmission of a configuration signal from an ONU 11 destined to receive the LP₁₁ mode group, for example the ONU 11 represented in Fig.10 and connected to the LP₁₁ₐ output of the remote SDM multiplexer 7. The configuration signal comprises for example a probe signal which features arc known by the OLT 5 and may also comprise an identifier of the ONU 11 sending the signal or any other information necessary for the OLT 5 to process the probe signal at destination. The signal is modulated according to an OOK-NRZ modulation which enables to have an ONU 11 with basic equipment. The signal is then transmitted through the FMF 1.

The second step 102 is the reception and the detection of the configuration signal sent by the ONU 11 on both the LP₁₁ₐ and LP_{11b} modes at the OLT 5 by the coherent receivers 69. Indeed, during propagation a portion of the signal sent on the LP₁₁ₐ mode at the ONU 11 has been transferred to the LP_{11b} mode so that detection on both modes is required to retrieve the whole signal.

The third step 103 refers to the determination of the transfer function based on the signals detected on both modes. Indeed, as described previously, the processing and the analysis of the detected signals enable determining the transfer function of the entire multimode optical path, including the FMF 1, the SDM multiplexer 7 and the SDM demultiplexer 67 for this mode. Such determination is achieved by the digital signal processing equipment 73 and corresponds, for example to a transfer matrix.

The fourth step 104 refers to the computation of the inverse transfer function, for example the inverse of the transfer matrix. Such computation can be achieved by the electronic processing equipment 87.

These configuration steps have to be done at the implementation of the PON 3 and at each modification of the PON 3, such as a change of the FMF 1 or a change of a multiplexer in order to determine the new transfer function of the optical link. Periodic configuration protocol may also be achieved to check that the optical link features have not changed.

Based on these configuration steps, communications can be exchanged between the OLT 5 and all the ONUs 11 connected to the LP₁₁ mode group and mainly the download streaming from the OLT 5 to the ONUs 11.

The fifth step 105 refers to the modulation of the data optical field sent by the laser sources 57 using the computed inverse transfer function to produce the optical signals associated with the different modes at the output of the PDM-IQ modulators 59. The application of such inverse transfer function is necessary to obtain all the signal only on the LP₁₁ₐ mode at the remote SDM demultiplexer 7.

The sixth step 106 refers to the multiplexing of the different signals and notably the SDM multiplexing of the signals corresponding the different modes such as the LP₁₁ₐ and LP_{11b} signals.

The last step 107 refers to the transmission of the multiplexed signal toward the ONUs 11 via the FMF 1 and the SDM demultiplexer 7. At the remote SDM demultiplexer 7 the different modes are demultiplexed and separated. On the LP₁₁ mode, a signal is received only on the LP₁₁ₐ mode so that the output of the SDM demultiplexer 7 corresponding to the LP_{11b} is not connected. Then the different modes are transmitted toward the ONUs 11, possibly via WDM demultiplexers.

Thus, the embodiments of the present invention, thanks to the configuration and the establishment of the transfer function of the FMF 1, enable the application of a SDM multiplexing without requiring powerful processing equipment on the customer's side, that is to say on the part from the remote SDM demultiplexer 7 and the ONUs 11. As a consequence, additional processing equipment arc required only at the OLT 5 level, however as the SDM multiplexing allows connecting more ONUs 11 to a single OLT 5, this leads to a cost reduction at the network scale. Furthermore, the ONUs 11 can keep their legacy architecture so that no new equipment are necessary at the custumer's side for existing network whereas new technology can be achieved on new part of the network. As a consequence, an OLT 5 can be connected to a higher number of ONUs 11 and these ONUs 11 may have former technologies or new technologies so that the present invention enables improving, the network without requiring to update or to replace existing ONUs.

## Claims

1. Method for applying spatial division multiplexing "SDM" on the optical signals transmitted from an optical line terminal "OLT" (5) to the optical network units "ONUs" (11) of a passive optical network "PON" (3) through at least one few mode fiber "FMF" (1) linked to a SDM demultiplexer (7) comprising a plurality of outputs associated respectively to a spatial mode, a selected output of the SDM demultiplexer (7) being linked to at least one ONU (11) wherein the method comprises the following steps:
- transmitting configuration signals from ONUs (11) connected to the selected outputs of the SDM demultiplexer (7) toward the OLT (5),
- receiving and detecting the transmitted configuration signals at the OLT (5),
- determining, within the OLT (5), the channel transfer function of the modes associated with the configuration signals received from the ONUs (11),
- computing the inverse of the determined channel transfer function,
- modulating the data optical field using the computed inverse transfer function to produce the optical signals associated with the different modes,
- multiplexing spatially the modulated optical signals,
- transmitting the multiplexed optical signals to the at least one FMF (1) toward the ONUs (11).

2. Method in accordance with claim 1 wherein the selected outputs of the SDM demultiplexer (7) arc selected so that only a degenerated spatial mode per spatial mode group is selected.

3. Method in accordance with claim 2 wherein, for the spatial mode group comprising degenerated spatial modes, the reception and detection of the transmitted configuration signals is achieved on all the degenerated spatial modes.

4. Method in accordance with one of the previous claims wherein the configuration signals comprise a predetermined probe signal.

5. Method in accordance with claim 4 wherein the configuration signals also comprise an identifier of the ONU (11) emitting the signal.

6. Method in accordance with one of the previous claims wherein the transmitted optical signals are also multiplexed according to a wavelength division multiplexing.

7. Method in accordance with one of the previous claims wherein the signals transmitted by the ONUs (11) toward the OLT (5) have a non-return to zero on-off keying modulation format.

8. Method in accordance with one of the previous claims wherein the signals received at the OLT (5) are received and detected by a polarization diversity coherent receiver (69).

9. Optical line terminal "OLT" (5) of a passive optical network "PON" (3), the said PON (3) comprising a spatial division multiplexing "SDM" multiplexer (55) located within the OLT (5), at least one few mode fiber "FMF" (1) and a SDM demultiplexer (7) comprising a plurality of outputs associated respectively to a spatial mode, a selected output of the SDM demultiplexer (7) being linked to at least one ONU (11), wherein the OLT (5) is configured for:
- receiving and detecting configuration signals transmitted by ONUs (11),
- determining the channel matrices of the modes associated with the configuration signals received from the Onus (11),
- computing the inverse of the determined channel matrices,
- modulating the data optical field using the computed inverse matrix to produce the optical signals associated with the different modes, multiplexing spatially the modulated optical signals,
- transmitting the multiplexed optical signal to the at least one FMF (1) toward the ONUs (11).

10. Optical line terminal "OLT" (5) in accordance with claim 9 wherein the selected outputs of the SDM demultiplexer (7) are selected so that only a degenerated spatial mode per spatial mode group is selected.

11. Optical line terminal (5) in accordance with claim 9 or 10 wherein, for the spatial mode group comprising degenerated spatial modes, the optical line terminal (5) is configured for receiving and detecting transmitted configuration signals on all the degenerated spatial modes.

12. Optical line terminal (5) in accordance with one of the claims from 9 to 11 wherein it comprises a polarization diversity coherent receiver (69) configured for receiving and detecting configuration signals transmitted by ONUs (11).

13. Optical line terminal (5) in accordance with one of the claims from 9 to 12 wherein it comprises digital signal processing equipments (73), the signals of a common mode group being processed in a common digital signal processing equipment (73).

14. Optical line terminal in accordance with one of the claims from 9 to 13 wherein it comprises modulators (59) configured for wavelength division multiplexing modulation and/or time division multiplexing.

15. Passive optical network "PON" (3) comprising an optical line terminal (5) according to one of claims 9 to 14, a few mode fiber (1) and a SDM demultiplexer (7) comprising a plurality of outputs associated respectively to a spatial mode, a selected output of the SDM demultiplexer (7) being linked to at least one ONU (11).

## Patentansprüche

1. Verfahren zur Anwendung des "SDM"-Raummultiplexverfahrens bei optischen Signalen, **dadurch gekennzeichnet, dass** die von einem optischen Leitungsanschluss "OLT" (5) an die optischen Netzeinheiten "ONUs" (11) eines passiven, optischen Netzwerks "PON" (3) über zumindest eine Few-Mode-Faser "FMF" (1), die an einen SDM-Demultiplexer (7), der vielfache Ausgänge, die dem entsprechenden Raummodus zugeordnet sind, und einen ausgewählten Ausgang am SDM-Demultiplexer (7) umfassen, der zumindest mit einer ONU (11) verbunden ist, in der das Verfahren folgende Schritte umfasst:
- Übertragung von Konfigurationssignalen von ONUs (11), die an die ausgewählten Ausgänge des SDM-Demultiplexers (7) angeschlossen sind, an die OLT (5),
- Empfang und Erkennung der übertragenen Konfigurationssignale an der OLT (5),
- Bestimmung der Kanalübertragungsfunktion der mit den Konfigurationssignalen assoziierten Modi, die in der OLT (5) an den ONUs (11) empfangen wurden,
- Berechnung des Kehrwrerts der bestimmten Kanalübertragungsfunktion,
- Modulation des optischen Datenfelds mittels der berechneten inversen Übertragungsfunktion,
- Erzeugung der optischen Signale, die zu den verschiedenen Modi gehören,
- Räumliches Multiplexen der modulierten, optischen Signale,
- Übertragung der multiplexierten, optischen Signale an die zumindest eine FMF (1) Richtung ONUs (11).

2. Verfahren nach Anspruch 1, **dadurch gekennzeichnet, dass** die ausgewählten Ausgänge des SDM-Demultiplexers (7) so gewählt werden, dass nur ein degenerierter Raummodus pro Raummodusgruppe gewählt wird.

3. Verfahren nach Anspruch 2, **dadurch gekennzeichnet, dass** für die degenerierte Raummodi umfassende Raummodusgruppe der Empfang und die Erkennung der übertragenen Konfigurationssignale auf allen der degenerierten Raummodi erreicht wird.

4. Verfahren nach einem der oben genannten Ansprüche, **dadurch gekennzeichnet, dass** die Konfigurationssignale ein vorher bestimmtes Sondensignal umfassen.

5. Verfahren nach Anspruch 4, **dadurch gekennzeichnet, dass** die Konfigurationssignale aucheinen Identifikator der ONU (11) umfassen, der das Signal ausgibt.

6. Verfahren nach einem der oben genannten Ansprüche, **dadurch gekennzeichnet, dass** der Bogen der übertragenen optischen Signale ebenfalls gemäß eines Wellenlängen-Multiplexverfahrens multiplexiert wird.

7. Verfahren nach einem der oben genannten Ansprüche, **dadurch gekennzeichnet, dass** die von den ONUs (11) an die OLT (5) übertragenen Signale ein Ein-/Aus-Schaltungsmodulationsformat ohne Rückkopplung an Null aufweisen.

8. Verfahren nach einem der oben genannten Ansprüche, **dadurch gekennzeichnet, dass** die an der OLT (5) empfangenen Signale von einem kohärenten Polarisations-Diversity-Empfänger (69) empfangen und erkannt werden.

9. Optischer Leitungsanschluss "OLT" (5) eines passiven, optischen Netzwerks "PON" (3), **dadurch gekennzeichnet, dass** das genannte PON (3) einen mit Raummultiplexverfahren arbeitenden "SDM"-Multiplexer (55), der sich in der OLT (5) befindet, mindestens eine Few-Mode-Faser "FMF"(1) sowie einen SDM-Demultiplexer (7) mit zahlreichen, dem jeweiligen Raummodus zugeordneten Ausgängen sowie einen ausgewählten Ausgang am SDM-Demultiplexer (7) umfasst, der zumindest mit einer ONU (11) verbunden ist, **dadurch gekennzeichnet, dass** er für Folgendes konfiguriert ist:
- Empfang und Erkennung von durch die ONUs (11) übertragene Konfigurationssignalen,
- Bestimmung der Kanalmatrizen der Modi, die den Konfigurationssignalen zugeordnet werden, die von den ONUs (11) empfangen werden,
- Berechnung des Kehrwerts der bestimmten Kanalmatrizen,
- Erzeugung des optischen Datenfelds mittels der Berechnung der inversen Matrize, um die optischen Signale zu erzeugen, die zu den verschiedenen Modi gehören,
- Räumliches Multiplexen der modulierten, optischen Signale,
- Übertragung des multiplexierten, optischen Signals an die zumindest eine FMF (1) Richtung ONUs (11).

10. Optischer Leitungsanschluss "OLT" (5) nach Anspruch 9, **dadurch gekennzeichnet, dass** die ausgewählten Ausgänge des SDM-Demultiplexers (7) so gewählt werden, dass nur ein degenerierter Raummodus pro Raummodusgruppe gewählt wird.

11. Optischer Leitungsanschluss (5) nach Anspruch 9 oder 10, **dadurch gekennzeichnet, dass** die Raummodusgruppe die degenerierten Raummodi umfasst und der optische Leitungsanschluss (5) für den Empfang und die Erkennung der übertragenen Konfigurationssignale in allen degenerierten Raummodi konfiguriert ist.

12. Optischer Leitungsanschluss (5) nach einem der Ansprüche 9 bis 11, **dadurch gekennzeichnet, dass** er einen kohärenten Polarisations-Diversity-Empfänger (69) umfasst, der zum Empfang und zur Erkennung der von durch die ONUs (11) übertragenen Konfigurationssignalen konfiguriert ist.

13. Optischer Leitungsanschluss (5) nach einem der Ansprüche 9 bis 12, **dadurch gekennzeichnet, dass** er die digitalen Signalverarbeitungsvorrichtungen (73) umfasst, wobei die Signale einer gemeinsamen Modusgruppe in einer gemeinsamen, digitalen Signalverarbeitungsvorrichtung (73) verarbeitet werden.

14. Optischer Leitungsanschluss nach einem der Ansprüche 9 bis 13, **dadurch gekennzeichnet, dass** er Modulatoren (59) umfasst, die für die Wellenlängen-Multiplexmodulation und/oder das Zeitmultiplexverfahren konfiguriert sind.

15. Passives, optisches Netzwerk "PON" (3), **dadurch gekennzeichnet, dass** es einen optischen Leitungsanschluss (5) nach einem der Ansprüche 9 bis 14, eine Few-Mode-Faser (1) und einen SDM-Demultiplexer (7) mit den dem jeweiligen Raummodus zugeordneten Ausgängen sowie einen ausgewählten Ausgang am SDM-Demultiplexer (7) umfasst, der zumindest mit einer ONU (11) verbunden ist.

## Revendications

1. Procédé pour appliquer un multiplexage par répartition spatiale "SDM" sur les signaux optiques transmis d'un terminal de ligne optique "OLT" (5) aux unités de réseau optiques "ONU" (11) d'un réseau optique passif "PON" (3) par l'intermédiaire d'au moins une fibre à peu de modes "FMF" (1) reliée à un démultiplexeur SDM (7) comprenant une pluralité de sorties associées respectivement à un mode spatial, une sortie sélectionnée du démultiplexeur SDM (7) étant reliée à au moins une ONU (11), le procédé comprenant les étapes suivantes :
- transmettre des signaux de configuration depuis des ONU (11) connectées aux sorties sélectionnées du démultiplexeur SDM (7) vers l'OLT (5),
- recevoir et détecter les signaux de configuration transmis au niveau de l'OLT (5),
- déterminer, à l'intérieur de l'OLT (5), la fonction de transfert de canal des modes associés aux signaux de configuration reçus en provenance des ONU (11),
- calculer l'inverse de la fonction de transfert de canal déterminée,
- moduler le champ optique de données en utilisant la fonction de transfert inverse calculée pour produire les signaux optiques associés aux différents modes,
- multiplexer spatialement les signaux optiques modulés,
- transmettre les signaux optiques multiplexés à la au moins une FMF (1) vers les ONU (11).

2. Procédé selon la revendication 1, dans lequel les sorties sélectionnées du démultiplexeur SDM (7) sont sélectionnées de sorte que seul un mode spatial dégénéré par groupe de mode spatial soit sélectionné.

3. Procédé selon la revendication 2, dans lequel, pour le groupe de mode spatial comprenant des modes spatiaux dégénérés, la réception et la détection des signaux de configuration transmis sont réalisées sur tous les modes spatiaux dégénérés.

4. Procédé selon l'une des revendications précédentes, dans lequel les signaux de configuration comprennent un signal de sonde prédéterminé.

5. Procédé selon la revendication 4, dans lequel les signaux de configuration comprennent également un identificateur de l'ONU (11) émettant le signal.

6. Procédé selon l'une des revendications précédentes, dans lequel les signaux optiques transmis sont également multiplexés selon un multiplexage par répartition en longueur d'onde.

7. Procédé selon l'une des revendications précédentes, dans lequel les signaux transmis par les ONU (11) vers l'OLT (5) ont un format de modulation par tout ou rien sans retour à zéro.

8. Procédé selon l'une des revendications précédentes, dans lequel les signaux reçus au niveau de l'OLT (5) sont reçus et détectés par un récepteur cohérent à diversité de polarisation (69).

9. Terminal de ligne optique "OLT" (5) d'un réseau optique passif "PON" (3), ledit PON (3) comprenant un multiplexeur de multiplexage par répartition spatiale "SDM" (55) localisé à l'intérieur de l'OLT (5), au moins une fibre à peu de modes "FMF" (1) et un démultiplexeur SDM (7) comprenant une pluralité de sorties associées respectivement à un mode spatial, une sortie sélectionnée du démultiplexeur SDM (7) étant reliée à au moins une ONU (11), l'OLT (5) étant configuré pour :
- recevoir et détecter des signaux de configuration transmis par des ONU (11),
- déterminer les matrices de canal des modes associés aux signaux de configuration reçus en provenance des ONU (11),
- calculer l'inverse des matrices de canal déterminées,
- moduler le champ optique de données en utilisant la matrice inverse calculée pour produire les signaux optiques associés aux différents modes,
- multiplexer spatialement les signaux optiques modulés,
- transmettre le signal optique multiplexé à la au moins une FMF (1) vers les ONU (11).

10. Terminal de ligne optique "OLT" (5) selon la revendication 9, dans lequel les sorties sélectionnées du démultiplexeur SDM (7) sont sélectionnées de sorte que seul un mode spatial dégénéré par groupe de mode spatial soit sélectionné.

11. Terminal de ligne optique (5) selon la revendication 9 ou 10, dans lequel, pour le groupe de mode spatial comprenant des modes spatiaux dégénérés, le terminal de ligne optique (5) est configuré pour recevoir et détecter des signaux de configuration transmis sur tous les modes spatiaux dégénérés.

12. Terminal de ligne optique (5) selon l'une des revendications 9 à 11, comprenant un récepteur cohérent à diversité de polarisation (69) configuré pour recevoir et détecter des signaux de configuration transmis par des ONU (11).

13. Terminal de ligne optique (5) selon l'une des revendications 9 à 12, comprenant des équipements de traitement de signal numérique (73), les signaux d'un groupe de mode commun étant traités dans un équipement de traitement de signal numérique commun (73).

14. Terminal de ligne optique selon l'une des revendications 9 à 13, comprenant des modulateurs (59) configurés pour une modulation de multiplexage par répartition en longueur d'onde et/ou un multiplexage par répartition dans le temps.

15. Réseau optique passif "PON" (3) comprenant un terminal de ligne optique (5) selon l'une des revendications 9 à 14, une fibre à peu de modes (1) et un démultiplexeur SDM (7) comprenant une pluralité de sorties associées respectivement à un mode spatial, une sortie sélectionnée du démultiplexeur SDM (7) étant reliée à au moins une ONU (11).
